# EUROPÄISCHE PATENTSCHRIFT

(11) **EP 4 179 228 B1**
(45) Veröffentlichungstag und Bekanntmachung des Hinweises auf die Patenterteilung: **24.09.2025**
(21) Anmeldenummer: 21737623.5
(22) Anmeldetag: 29.06.2021
(51) Int. Cl.: F16G 13/16, H02G 11/00, H02G 3/04, H02G 3/06

(54) **AUFLAGE FÜR EINE ENERGIEFÜHRUNGSKETTE**
SUPPORT FOR AN ENERGY SUPPLY CHAIN
SUPPORT POUR UNE CHAÎNE D'ALIMENTATION EN ÉNERGIE

(30) Priorität: 08.07.2020 DE 202020103942 U
(43) Veröffentlichungstag der Anmeldung: 17.05.2023
(73) Patentinhaber: Tsubaki Kabelschlepp GmbH, 57482 Wenden-Gerlingen (DE)
(72) Erfinder: DAUB, Mark, 57555 Mudersbach (DE); WENDIG, Thomas, 57581 Katzwinkel/Elkhausen (DE)
(74) Vertreter: Neumann, Ditmar
(86) Internationale Anmeldenummer: PCT/EP2021/067775
(87) Internationale Veröffentlichungsnummer: WO 2022/008291

(56) Entgegenhaltungen:
- WO-A1-2016/015942
- US-A1- 2003 047 343

## Beschreibung

Die Erfindung betrifft eine Auflage für eine Energieführungskette sowie eine Vorrichtung und eine Anordnung mit einer solchen Auflage.

Energieführungsketten werden dazu genutzt, Leitungen wie Kabel oder Schläuche zu schützen und zu führen. Energieführungsketten können auch als Leitungsführungseinrichtungen bezeichnet werden. Eine Energieführungskette kann aus Gliedern zusammengesetzt sein oder einstückig ausgebildet sein. Es ist bekannt, Energieführungsketten teilweise mit einer Auflage zu unterstützen. Eine derartige Auflage kann beispielsweise so angeordnet sein, dass das Obertrum der Energieführungskette auf der Auflage abgelegt werden kann. Wird die Energieführungskette bewegt, bewegt sich das Obertrum entlang der Auflage. Die dabei entstehende Reibung kann mit Rollen reduziert werden. Bei bekannten Auflagen kommt es regelmäßig durch Temperaturveränderungen zu Spannungen, die die Auflagen oder deren Halter beschädigen können.

Durch die Druckschrift WO 2016/015 942 A1 ist eine Führungseinrichtung für Energieführungsketten bekannt, die alle Merkmale des Oberbegriffs von Anspruch 1 aufweist. Die Führungseinrichtung ist aus einzelnen Abschnitten zusammengesetz. Die Führungseinrichtung weist Führungsschienen für ein Obertrum einer Energieführungskette. Die Führungsschienen sind über eine Nut-Feder-Verbindung miteinander verbunden.

Aufgabe der vorliegenden Erfindung ist es, ausgehend vom beschriebenen Stand der Technik eine Auflage bereitzustellen, die Temperaturveränderungen besonders gut standhalten kann. Zudem sollen eine entsprechende Vorrichtung und Anordnung vorgestellt werden.

Diese Aufgaben werden gelöst mit einer Auflage, einer Vorrichtung und einer Anordnung gemäß den unabhängigen Ansprüchen. Weitere vorteilhafte Ausgestaltungen sind in den abhängigen Ansprüchen angegeben. Die in den Ansprüchen und in der Beschreibung dargestellten Merkmale sind in beliebiger, technologisch sinnvoller Weise miteinander kombinierbar.

Erfindungsgemäß wird eine Auflage für eine Energieführungskette vorgestellt. Die Auflage ist in Längsrichtung in eine Mehrzahl von Abschnitten unterteilt. Die Abschnitte weisen an ihren Enden jeweils mindestens einen Zahn auf. Jeweils zwei benachbarte der Abschnitte sind über die Zähne miteinander verzahnt.

Die Auflage wird vorzugsweise zusammen mit einer Energieführungskette verwendet. Auf die Ausgestaltung der Energieführungskette kommt es nicht an. Insbesondere kann die Energieführungskette aus Gliedern zusammengesetzt sein oder einstückig ausgebildet sein. Die Energieführungskette kann auch als eine Leitungsführungseinrichtung bezeichnet werden.

Auf die Auflage kann ein Teil einer Energieführungskette aufgelegt werden. Vorzugsweise ist die Auflage als Rollauflage ausgebildet. In dem Fall ist die Auflage dazu bestimmt, dass Rollen der Energieführungskette auf der Rollauflage rollen. Dadurch kann der Teil der Energieführungskette, insbesondere ein Obertrum der Energieführungskette, entlang der Auflage bewegt werden. Alternativ ist es bevorzugt, dass die Auflage als Gleitauflage ausgebildet ist. In dem Fall ist die Auflage dazu bestimmt, dass ein Teil der Energieführungskette, insbesondere über Gleitschuhe, auf der Auflage gleitet. Die Energieführungskette kann auch ohne Gleitschuhe auf der Auflage gleiten. Die Auflage kann auch eine Roll- oder Gleitauflage sein. In dem Fall ist die Auflage dazu bestimmt, dass Rollen der Energieführungskette auf der Rollauflage rollen oder dass ein Teil der Energieführungskette, insbesondere über Gleitschuhe, auf der Auflage gleitet.

Die Auflage ist in Längsrichtung in eine Mehrzahl von Abschnitten unterteilt. Die Längsrichtung der Auflage ist die Richtung, in der die Energieführungskette über die Auflage bewegt werden kann. Weist die Energieführungsketten Rollen auf, ist die Längsrichtung parallel zu einer Laufrichtung der Rollen. Vorzugsweise ist die Energieführungskette in 5 bis 10 Abschnitte unterteilt. Vorzugsweise sind die Abschnitte identisch zueinander ausgebildet. Die einzelnen Abschnitte sind vorzugsweise jeweils einstückig ausgebildet.

Durch die Unterteilung der Auflage in Abschnitte kann die thermische Ausdehnung bei Temperaturänderungen ausgeglichen werden. Das gilt insbesondere, wenn die Auflage an einem Halter gehalten ist, der aus einem anderen Material als die Auflage gebildet ist. Die beschriebene Ausgestaltung ist für diesen Fall besonders gut geeignet, so dass es bevorzugt ist, dass die Auflage mit einem Halter verwendet wird, der aus einem anderen Material als die Auflage gebildet ist. So kann die Auflage beispielsweise aus Kunststoff gebildet sein und an einem Halter aus Aluminium gehalten sein. Der Halter kann insbesondere als ein Profil, insbesondere als ein Aluminiumprofil, ausgebildet sein. Der Querschnitt des Halters ist vorzugsweise über die Längsrichtung konstant. Mehrere der Abschnitte der Auflage können an dem gleichen Halter gehalten sein. Da Kunststoff und Aluminium unterschiedliche thermische Ausdehnungskoeffizienten haben, können die Abschnitte durch thermische Ausdehnung des Halters relativ zueinander verschoben werden. Eine derartige Verschiebung ist aufgrund der Unterteilung der Auflage in die Abschnitte möglich. Dadurch werden Spannungen in der Auflage verhindert, die die Auflage und/oder den Halter beschädigen könnten.

Es ist nicht erforderlich, dass die Auflage in Längsrichtung beweglich an dem Halter gehalten ist. Es ist auch nicht erforderlich, dass sich der Abstand zwischen benachbarten Abschnitten im Betrieb tatsächlich verändert. Durch die Unterteilung der Auflage in die Abschnitte wird lediglich die Möglichkeit geschaffen, eine Bewegung benachbarter Abschnitte relativ zueinander auszugleichen. Diese Bewegung kann aufgrund von thermischer Ausdehnung des Halters auch dann entstehen, wenn die Abschnitte jeweils fest an dem Halter gehalten sind. Insbesondere wenn die Auflage bei konstanter Temperatur verwendet wird, können die Positionen der Abschnitte relativ zueinander unverändert bleiben. Nichtsdestotrotz ist es bevorzugt, dass die Abschnitte in Längsrichtung beweglich an dem Halter gehalten sind. Dadurch können Temperaturveränderungen besonders gut ausgeglichen werden.

Die Abschnitte sind vorzugsweise so dimensioniert und an dem Halter gehalten, dass die Abschnitte bei einer mittleren Temperatur mit mittlerem Abstand zueinander angeordnet sind. Die mittlere Temperatur liegt in der Mitte zwischen der maximalen und der minimalen Temperatur, für die die Auflage bestimmt und eingerichtet ist. Der mittlere Abstand liegt in der Mitte zwischen einem maximalen und einem minimalen Abstand, für den die Auflage bestimmt und eingerichtet ist. Durch diese Ausgestaltung können Abweichungen der Temperatur von der mittleren Temperatur nach oben und unten ausgeglichen werden. Bei der mittleren Temperatur ist also zwischen benachbarten Abschnitten eine Dehnungsfuge ausgebildet. Diese kann bei Temperaturveränderung größer oder kleiner werden.

Bewegt sich die Energieführungskette über Dehnungsfugen zwischen zwei Abschnitten, besteht grundsätzlich das Problem, dass es zu einer Geräuschentwicklung und/oder zu Vibrationen kommen. Rollt beispielsweise eine Rolle von einem Abschnitt zum nächsten, kann die Rolle in die Dehnungsfuge einsinken. Das kann das Geräusch erzeugen und/oder die Vibrationen hervorrufen. Dadurch können die Energieführungskette, die Auflage und deren Halter verstärkt verschleißen oder sogar beschädigt werden. Auch im Falle einer Energieführungskette, die über die Auflage gleitet, können Dehnungsfugen Geräuschentwicklungen verursachen oder zu einem ruckeligen Lauf der Energieführungskette führen.

Bei der beschriebenen Vorrichtung können die Geräuschentwicklung und/oder die Vibrationen vermieden oder jedenfalls reduziert werden. Dazu weisen die Abschnitte an ihren Enden jeweils mindestens einen Zahn auf, wobei jeweils zwei benachbarte der Abschnitte über die Zähne miteinander verzahnt sind. Dies bezieht sich auf die jeweiligen beiden Enden der Abschnitte in Längsrichtung. Das sind die Enden, mit denen die benachbarten Abschnitte aneinandergrenzen und zwischen denen - sofern die Temperatur nicht einen entsprechenden Extremwert annimmt - die Dehnungsfuge gebildet ist. Dass die Zähne miteinander verzahnt sind, bedeutet, dass die Zähne der benachbarten Abschnitte in Längsrichtung zumindest teilweise überlappen. Die Zähne greifen also ineinander. Das bedeutet, dass der mindestens eine Zahn eines ersten Abschnitts jeweils in eine Lücke neben dem mindestens einen Zahn eines zweiten Abschnitts eingreift. Es ist bevorzugt, dass die Abschnitte an ihren Enden jeweils eine Mehrzahl von Zähnen aufweisen. In dem Fall kann ein Zahn des ersten Abschnitts in eine Lücke zwischen zwei benachbarten Zähnen des zweiten Abschnitts eingreifen.

Durch die Verzahnung der Abschnitte kann insbesondere verhindert werden, dass Rollen in die Dehnungsfuge einsinken. Das gilt jedenfalls bei Verwendung einer geeigneten Rolle. Eine geeignete Rolle hat eine Lauffläche, deren Ausdehnung quer zur Längsrichtung größer ist als die größte Ausdehnung der Dehnungsfuge quer zur Längsrichtung. Die Ausdehnung der Dehnungsfuge quer zur Längsrichtung kann an verschiedenen Stellen in Längsrichtung unterschiedlich groß sein. Besonders bevorzugt hat die Rolle quer zur Längsrichtung eine solche Ausdehnung, dass die Rolle an jeder Position in Längsrichtung mit mindestens einem der Abschnitte in Kontakt stehen kann. Die Energieführungskette ist vorzugsweise so ausgebildet, dass die Rolle bei bestimmungsgemäßem Gebrauch bei jeder Position in Längsrichtung mit jedenfalls einem der Abschnitte in Kontakt ist. Aufgrund der Zähne kann die Rolle dann nicht in die Dehnungsfuge einsinken. So ist die Rolle zunächst mit einem ersten Abschnitt der Auflage in Kontakt. Erreicht die Rolle den Übergang zum folgenden Abschnitt, ist nur noch der Teil der Rolle mit der Auflage in Kontakt, der sich auf den Zähnen des ersten Abschnitts befindet. Der übrige Teil der Rolle überquert die Dehnungsfuge und gelangt anschließend mit dem folgenden Abschnitt der Auflage in Kontakt. Erst dann überquert auch der Rest der Rolle die Dehnungsfuge.

Die Ausgestaltung der Dehnungsfuge mit den Zähnen hat zudem den Vorteil, dass die Abschnitte mit besonders großen Toleranzen gefertigt und montiert werden können. Würde die Dehnungsfuge gerade und quer zur Längsrichtung verlaufen, könnte ein Einsinken von Rollen in die Dehnungsfuge nur dadurch reduziert werden, dass die Dehnungsfuge möglichst klein gestaltet wird. Je kleiner die Dehnungsfuge sein soll, umso präziser müssten die Abschnitte dimensioniert und angeordnet werden. Eine kleine Dehnungsfuge hat auch den Nachteil, dass mit dieser nur vergleichsweise geringe Temperaturveränderungen ausgeglichen werden können. Mit der beschriebenen Auflage hingegen genügt es, dass die benachbarten Abschnitte über die Zähne miteinander verzahnt sind. Die Größe der Dehnungsfuge zwischen den Zähnen hat eine sehr viel geringere Bedeutung als die Größe einer geraden und quer zur Längsrichtung verlaufenden Dehnungsfuge.

Die Auflage kann an ihren beiden Enden in Längsrichtung einen jeweiligen Randabschnitt aufweisen. Dieser weist nur an einem seiner Enden mindestens einen Zahn, vorzugsweise eine Mehrzahl von Zähnen, auf. Über diese(n) kann der Randabschnitt in den benachbarten Abschnitt eingreifen. An dem anderen Ende des Randabschnitts, das das Ende der Auflage bildet, sind keine Zähne erforderlich. Es ist daher bevorzugt, dass die Auflage neben den beschriebenen Abschnitten an ihren Enden in Längsrichtung einen jeweiligen Randabschnitt aufweist. Alternativ ist es aber auch möglich, dass die Randabschnitte wie die übrigen Abschnitte ausgebildet sind. In dem Fall können alle Abschnitte der Auflage als die zuvor beschriebenen Abschnitte aufgefasst werden. Die Zähne an den Enden der Auflage können in dem Fall ungenutzt bleiben. Die Ausgestaltung ohne besondere Randabschnitte erleichtert die Herstellung.

In einer bevorzugten Ausführungsform bildet die Auflage eine Roll- oder Gleitfläche für die Energieführungskette. Die Roll- oder Gleitfläche ist teilweise von den Zähnen gebildet.

Die Roll- oder Gleitfläche ist eine Oberfläche der Abschnitte der Auflage. Die Roll- oder Gleitfläche ist vorzugsweise eben ausgebildet. Die Roll- oder Gleitfläche ist vorzugsweise so ausgebildet, dass eine Energieführungskette auf der Roll- oder Gleitfläche gleiten oder mit Rollen auf der Roll- oder Gleitfläche rollen kann. Die Auflage kann insoweit für verschiedene Energieführungsketten genutzt werden. Zudem ist die Roll- oder Gleitfläche vorzugsweise so geformt, dass eine Flüssigkeit wie Regenwasser von der Roll- oder Gleitfläche ablaufen kann. Die Roll- oder Gleitfläche wird durch die Dehnungsfuge zwischen benachbarten Abschnitten unterbrochen. Rollen der Energieführungskette können auf der Roll- oder Gleitfläche rollen. Dazu können Laufflächen der Rollen mit der Roll- oder Gleitfläche in Kontakt gelangen. Alternativ oder zusätzlich kann ein Teil der Energieführungskette, insbesondere über Gleitschuhe, auf der Roll- oder Gleitfläche gleiten. Dass die Roll- oder Gleitfläche teilweise durch die Zähne gebildet ist, bedeutet insbesondere, dass die Zähne bei Betrachtung der Roll- oder Gleitfläche als solche zu erkennen sind.

In einer weiteren bevorzugten Ausführungsform der Auflage weisen die Abschnitte an ihren Enden jeweils eine Mehrzahl der Zähne auf, die in Längsrichtung der Auflage versetzt zueinander angeordnet sind.

Diese Ausführungsform ist auf den Fall von mehreren Zähnen pro Ende eines Abschnitts gerichtet. Dabei sind die Zähne am Ende eines Abschnitts in Längsrichtung versetzt zueinander angeordnet. Dadurch kann beispielsweise ein Einsinken von Rollen in die Dehnungsfuge besonders gut verhindert werden. Das liegt daran, dass eine Rolle nicht zeitgleich über alle Zähne von einem Abschnitt auf den folgenden Abschnitt übergeht. Für eine gleitende Energieführungskette gilt Entsprechendes. Es genügt, dass die quer zur Längsrichtung benachbarten Zähne in Längsrichtung an unterschiedlichen Positionen angeordnet sind. So ist es beispielsweise denkbar, dass jeder zweite Zahn eines Endes eines Abschnitts an der gleichen Position in Längsrichtung angeordnet ist. Bevorzugt ist es aber, dass die Zähne eines Endes eines Abschnitts entlang einer Linie angeordnet sind, die schräg zur Längsrichtung steht. Diese Linie kann beispielsweise jeweils durch die Spitzen der Zähne verlaufen.

In einer weiteren bevorzugten Ausführungsform der Auflage weisen die Abschnitte an ihren Enden jeweils zwischen 1 und 10 Zähne auf.

Es hat sich herausgestellt, dass durch diese Ausgestaltung ein besonders ruhiger Lauf der Energieführungskette erreicht werden kann. Bevorzugt ist der Fall, dass die Abschnitte an ihren Enden jeweils eine Mehrzahl der Zähne aufweisen. Es genügt aber, dass pro Ende eines Abschnitts ein Zahn vorgesehen ist. Beispielsweise können an dem Ende eines ersten Abschnitts ein einzelner Zahn und an dem zugehörigen Ende eines zweiten Abschnitts zwei Zähne vorgesehen sein. Der Zahn des ersten Abschnitts kann in dem Fall in die Lücke zwischen den beiden Zähnen des zweiten Abschnitts eingreifen. Denkbar ist aber auch, dass beide Abschnitte an ihrem jeweiligen Ende nur einen einzelnen Zahn aufweisen. In dem Fall können die benachbarten Abschnitte dadurch miteinander verzahnt sein, dass die Zähne der beiden Abschnitte nebeneinander angeordnet sind. Der Zahn eines ersten Abschnitts greift in dem Fall in eine Aussparung ein, die neben dem Zahn des zweiten Abschnitts gebildet ist. Diese Aussparung ist nur zu einer Seite begrenzt. Die Enden der Abschnitte können in dem Fall insbesondere eine L-Form haben.

Die Abschnitte weisen an ihren Enden ein jeweiliges Anschlagselement auf, durch welches sich benachbarte der Abschnitte in Längsrichtung der Auflage nur begrenzt voneinander entfernen können.

Die Abschnitte können in zwei extremen Positionen vorliegen: Einerseits können die Abschnitte unmittelbar miteinander in Kontakt stehen. Näher aneinander bewegt werden können die Abschnitte nicht mehr. Andererseits können die Abschnitte so weit auseinandergezogen werden, dass die Anschlagselement miteinander in Kontakt gelangen. Die Anschlagselemente verhindern dann, dass die Abschnitte weiter auseinandergezogen werden. Das ist beispielsweise möglich, indem jeweils ein Zahn pro Ende eines Abschnitts einen Vorsprung als Anschlagselement aufweist. Der Vorsprung kann insbesondere quer zur Längsrichtung von dem Zahn abstehen. Durch Zusammenwirken mit einem entsprechenden Vorsprung an einem Zahn des benachbarten Abschnitts kann so die Bewegung der Abschnitte in Längsrichtung begrenzt werden. Alternativ ist es beispielsweise möglich, dass ein Zahn eines ersten Abschnitts T-förmig ausgebildet ist und dass zwei benachbarte Zähne eines zweiten Abschnitts jeweils L-förmig ausgebildet und so angeordnet sind, dass eine Aussparung gebildet ist, in der der T-förmige Zahn nur begrenzt beweglich ist.

In einer bevorzugten Ausführungsform bildet die Auflage eine Roll- oder Gleitfläche für die Energieführungskette. Die Roll- oder Gleitfläche ist an mindestens einem Ende mindestens eines der Abschnitte quer zur Längsrichtung abgeflacht.

Dass die Roll- oder Gleitfläche quer zur Längsrichtung abgeflacht ist, bedeutet, dass die Roll- oder Gleitfläche bei bestimmungsgemäßer Orientierung der Auflage zu den jeweiligen Enden hin abfällt. In einem an das jeweilige Ende angrenzenden Abschnitt ist die Roll- oder Gleitfläche also gegenüber der Längsrichtung geneigt. In einem Abschnitt zwischen den Enden ist die Roll- oder Gleitfläche vorzugsweise eben ausgebildet, insbesondere horizontal bei bestimmungsgemäßer Orientierung der Auflage. Vorzugsweise ist die Roll- oder Gleitfläche an mindestens einem Paar von aneinandergrenzenden Enden der Abschnitte jeweils quer zur Längsrichtung der Auflage abgeflacht. Vorzugsweise ist die Roll- oder Gleitfläche an beiden jeweiligen Enden aller Abschnitte abgeflacht. Diese Ausführungsform ist besonders dafür geeignet, dass ein Teil einer Energieführungskette über die Auflage gleitet. Die Auflage ist vorzugsweise für eine rollenlose Energieführungskette geeignet. Durch die abgeflachten Enden kann ein Kontakt zwischen der Energieführungskette und der Dehnungsfuge verhindert werden.

Als ein weiterer Aspekt der Erfindung wird eine Vorrichtung zum Halten und Führen einer Energieführungskette vorgestellt. Die Vorrichtung umfasst einen Halter und eine daran befestigte Auflage. Die Auflage ist in eine Mehrzahl von Abschnitten unterteilt. Die Abschnitte weisen an ihren Enden jeweils mindestens einen Zahn auf. Über die Zähne sind jeweils zwei benachbarte der Abschnitte miteinander verzahnt.

Die beschriebenen Vorteile und Merkmale der Auflage sind auf die Vorrichtung anwendbar und übertragbar, und umgekehrt. Die Auflage der Vorrichtung ist vorzugsweise wie beschrieben ausgebildet. Die Auflage ist vorzugsweise für die Vorrichtung eingerichtet.

Die Vorrichtung ist dazu geeignet, eine Energieführungskette zu halten und zu führen. Dazu weist die Vorrichtung neben der Auflage den Halter auf. Der Halter dient dem Halten der Auflage. Darüber hinaus kann der Halter die Bewegung der Führungsrinne quer zur Längsrichtung einschränken und die Führungsrinne insoweit führen.

Es ist nicht erforderlich, dass die Vorrichtung das gesamte Gewicht der Energieführungskette allein tragen kann. Es genügt, dass die Vorrichtung dazu beitragen kann, die Energieführungskette zu halten und zu führen. Die Energieführungskette kann durch die Vorrichtung insbesondere insoweit gehalten werden, als dass ein Teil der Energieführungskette auf der Auflage abgelegt werden kann. Insbesondere kann eine Seitenlasche eines Obertrums der Energieführungskette auf die Auflage aufgelegt werden. Die Energieführungskette weist vorzugsweise zwei gegenüberliegende Seitenlaschen auf. Vorzugsweise wird jede der Seitenlaschen zumindest teilweise durch eine jeweilige wie beschrieben ausgebildete Vorrichtung gehalten. Zwei Vorrichtungen werden vorzugsweise als eine Anordnung gemeinsam verwendet, wobei die beiden Vorrichtungen zusammen die Energieführungskette halten und führen. Die beiden Vorrichtungen können insbesondere identisch zueinander oder spiegelbildlich zueinander ausgebildet sein. Vorzugsweise sind die beiden Vorrichtungen einander gegenüberliegend angeordnet. Eine Energieführungskette kann alternativ auch mit einer einzigen Vorrichtung mit einem einzigen Halter und zwei Auflagen gehalten und geführt werden, wobei die beiden Auflagen an dem einen Halter befestigt sind. In dem Fall ist es bevorzugt, dass der Halter U-förmig ausgebildet ist. Dadurch können die beiden Auflagen einander gegenüberliegend innerhalb des U-förmigen Halters an dessen Seitenwänden gehalten sein.

In einer bevorzugten Ausführungsform der Vorrichtung weist der Halter eine Führungsfläche auf, an der die Auflage gehalten ist. Eine Roll- oder Gleitfläche der Auflage ist senkrecht zu der Führungsfläche ausgerichtet.

Die Führungsfläche dient dazu, die Bewegung der Energieführungskette quer zur Längsrichtung einzuschränken. Dafür ist es nicht erforderlich, dass die Energieführungskette im Betrieb tatsächlich mit der Führungsfläche in Kontakt gelangt. Es genügt, dass beim bestimmungsgemäßen Betrieb die Möglichkeit dafür besteht.

Als ein weiterer Aspekt der Erfindung wird eine Anordnung vorgestellt, die eine Energieführungskette und eine Auflage umfasst. Die Auflage ist in eine Mehrzahl von Abschnitten unterteilt. Die Abschnitte weisen an ihren Enden jeweils mindestens einen Zahn auf. Jeweils zwei benachbarte der Abschnitte sind über die Zähne miteinander verzahnt. Ein Teil der Energieführungskette liegt auf einer von der Auflage gebildeten Roll- oder Gleitfläche auf.

Die beschriebenen Vorteile und Merkmale der Auflage und der Vorrichtung sind auf die Anordnung anwendbar und übertragbar, und umgekehrt. Die Auflage der Anordnung ist vorzugsweise wie beschrieben ausgebildet. Die Auflage ist vorzugsweise für die Anordnung eingerichtet. Die Anordnung ist vorzugsweise aus der Vorrichtung und der Energieführungskette gebildet. Die Vorrichtung ist vorzugsweise für die Anordnung eingerichtet. Die Energieführungskette ist nicht Teil der beschriebenen Vorrichtung, wohl aber der beschriebenen Anordnung.

Als Teil der Energieführungskette kann insbesondere zumindest ein Teil eines Obertrums der Energieführungskette auf der Roll- oder Gleitfläche aufliegen, insbesondere über Rollen. Das bezieht sich auf die Ausgestaltung der Energieführungskette mit einem Obertrum, einem Unterturm und einem dazwischen angeordneten Umlenkbereich. Die Auflage dient in dem Fall dazu, das Gewicht des Obertrums zumindest teilweise zu halten. Insbesondere kann eine Seitenlasche des Obertrums auf der ersten Roll- oder Gleitfläche aufliegen.

In einer bevorzugten Ausführungsform umfasst die Anordnung weiterhin einen Halter mit einer Führungsfläche. Die Auflage ist an der Führungsfläche gehalten. Die Roll- oder Gleitfläche ist senkrecht zu der Führungsfläche ausgerichtet. Ein Teil der Energieführungskette ist durch die Führungsfläche geführt.

Insbesondere in dieser Ausgestaltung umfasst die Anordnung neben der Energieführungskette auch die zuvor beschriebene Vorrichtung. Vorzugsweise umfasst die Anordnung zwei der Vorrichtungen, die einander gegenüberliegend angeordnet sind.

In einer weiteren bevorzugten Ausführungsform der Anordnung ist an dem Halter eine Ablagefläche ausgebildet, die zu der Roll- oder Gleitfläche der Auflage parallel ausgerichtet ist.

Als Teil der Energieführungskette kann insbesondere zumindest ein Teil eines Untertrums der Energieführungskette auf der Ablagefläche aufliegen. Insbesondere kann eine Seitenlasche des Untertrums auf der Ablagefläche aufliegen. Insbesondere im Falle eines U-förmigen Halters können beide Seitenlaschen des Untertrums gemeinsam auf der Ablagefläche aufliegen. Die Ablagefläche kann insbesondere an einer Innenseite eines Bodens des U-förmigen Halters gebildet sein. Werden zwei gegenüberliegend angeordnete Vorrichtungen gemeinsam verwendet, liegt eine erste der Seitenlaschen vorzugsweise auf der Ablagefläche einer ersten der Vorrichtungen auf und liegt eine zweite der Seitenlaschen vorzugsweise auf der Ablagefläche einer zweiten der Vorrichtungen auf.

Die Ablagefläche kann an einem Teil des Halters ausgebildet sein. Dieser Teil des Halters kann einstückig mit dem übrigen Teil des Halters ausgebildet sein, insbesondere als Fuß des Halters, oder als gesondertes Element an dem Halter befestigt sein. Das gesonderte Element kann wie die beschriebene Auflage ausgebildet sein. Der Fuß des Halters ist vorzugsweise aus dem gleichen Material gebildet wie der übrige Halter. Im Unterschied zur vorzugsweise aus einem anderen Material gebildeten Auflage kommt es daher bei Temperaturveränderungen zu keinen Spannungen zwischen dem Fuß und dem übrigen Teil des Halters. Daher kann der Fuß in Längsrichtung durchgehend ohne Dehnungsfuge ausgebildet sein.

In einer weiteren bevorzugten Ausführungsform der Anordnung weist die Energieführungskette ein Obertrum und ein Untertrum auf. Zumindest ein Teil des Obertrums liegt auf der Roll- oder Gleitfläche auf. Zumindest ein Teil des Untertrums liegt auf der Ablagefläche auf.

In einer bevorzugten Ausführungsform der Anordnung weist die Energieführungskette eine Mehrzahl von Rollen auf. Ein Teil der Energieführungskette liegt mit den Rollen auf der von der Auflage gebildeten Roll- oder Gleitfläche auf.

Die Erfindung wird nachfolgend anhand der Figuren näher erläutert. Die Figuren zeigen ein besonders bevorzugtes Ausführungsbeispiel, auf das die Erfindung jedoch nicht begrenzt ist. Die Figuren und die darin dargestellten Größenverhältnisse sind nur schematisch. Es zeigen:
- Fig. 1:: eine erfindungsgemäße Vorrichtung zum Halten und Führen einer Energieführungskette,
- Fig. 2:: eine Draufsicht auf einen Teil der Auflage der Vorrichtung aus Fig. 1,
- Fig. 3a und 3b:: zwei weitere Draufsichten auf einen Teil der Auflage der Vorrichtung aus Fig. 1,
- Fig. 4:: eine Querschnittsdarstellung einer erfindungsgemäßen Anordnung umfassend die Vorrichtung aus Fig. 1,
- Fig. 5:: eine perspektivische Darstellung eines Abschnitts einer erfindungsgemäßen Auflage,
- Fig. 6:: eine Seitenansicht des Abschnitts aus Fig. 5,
- Fig. 7:: eine Draufsicht auf die Enden zweier Abschnitte einer Rollauflage, die wie in Fig. 5 gezeigt ausgebildet sind.

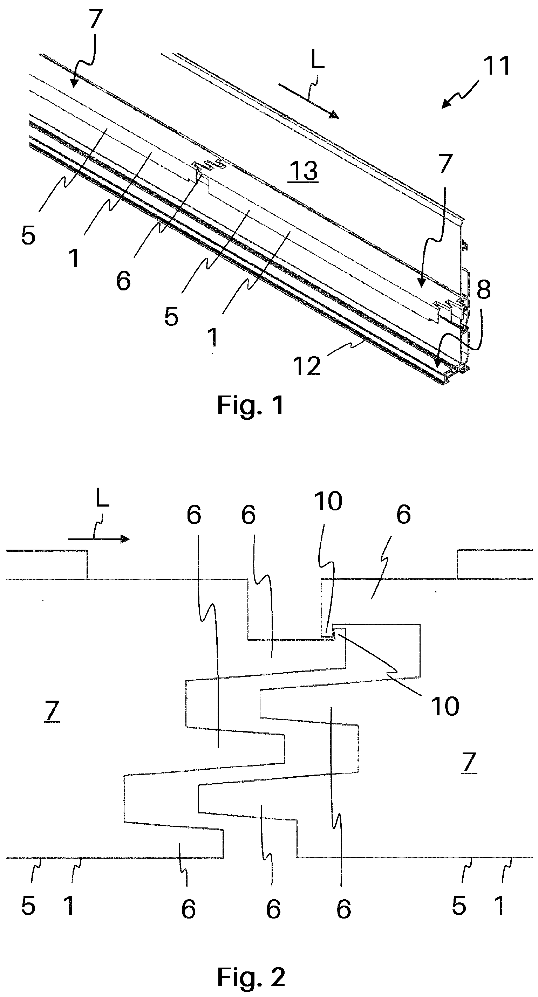

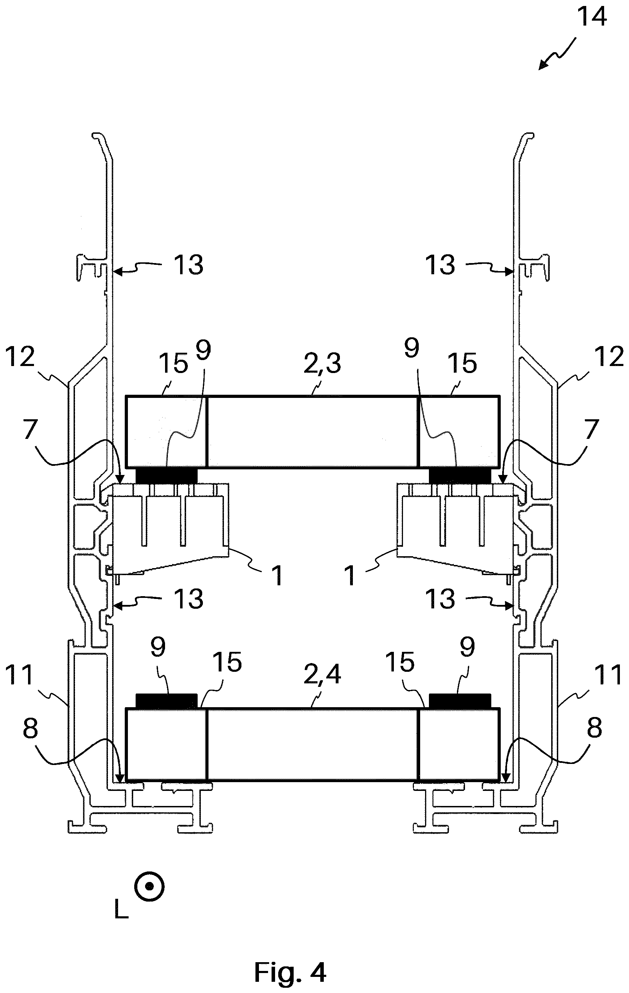

Fig. 1 zeigt Vorrichtung 11 zum Halten und Führen einer (in Fig. 4 gezeigten) Energieführungskette 2. Die Vorrichtung 11 umfasst einen Halter 12 und eine daran befestigte Auflage 1. Die Auflage 1 ist in einer Längsrichtung L in eine Mehrzahl von Abschnitten 5 unterteilt. In Fig. 1 ist ein Abschnitte 5 vollständig und ein Abschnitt 5 teilweise gezeigt. Die Abschnitte 5 weisen an ihren Enden eine jeweilige Mehrzahl von Zähnen 6 auf, durch welche die beiden gezeigten Abschnitte 5 miteinander verzahnt sind. In Fig. 1 ist zu erkennen, dass die beiden gezeigten Abschnitte 5 dort ineinandergreifen, wo einer der Zähne 6 beispielhaft mit einem Bezugszeichen versehen ist.

Die Auflage 1 bildet eine Roll- oder Gleitfläche 7 für die Energieführungskette 2. Ein Teil des Obertrums 3 der Energieführungskette 2 kann auf der Roll- oder Gleitfläche 7 aufliegen. Die Roll- oder Gleitfläche 7 ist teilweise von den Zähnen 6 gebildet. Die Abschnitte 5 bilden die Roll- oder Gleitfläche 7 gemeinsam. Die Roll- oder Gleitfläche 7 ist also dort unterbrochen, wo die Abschnitte 5 aneinandergrenzen und über die Zähne 6 miteinander verzahnt sind. Die Auflage 1 ist an einer Führungsfläche 13 des Halters 12 gehalten. Die Roll- oder Gleitfläche 7 ist senkrecht zu der Führungsfläche 13 ausgerichtet. Die Energieführungskette 2 kann durch die Führungsfläche 13 geführt werden.

An dem Halter 12 ist weiterhin eine Ablagefläche 8 ausgebildet, die zu der Roll- oder Gleitfläche 7 parallel ausgerichtet ist. Ein Teil des Untertrums 4 der Energieführungskette 2 kann auf der Ablagefläche 8 aufliegen.

Fig. 2 zeigt eine Draufsicht auf einen Teil der Auflage 1 der Vorrichtung 11 aus Fig. 1. Gezeigt ist die Roll- oder Gleitfläche 7 am Übergang zwischen zwei benachbarten Abschnitten 5 der Auflage 1. Beide Abschnitte 5 weisen an ihrem gezeigten Ende jeweils drei Zähne 6 auf. Die Zähne 6 der beiden Abschnitte 5 greifen ineinander. Durch die Zähne 6 wird verhindert, dass eine (in Fig. 4 gezeigte) Rolle 9 der Energieführungskette 2 beim Übertritt von einem Abschnitt 5 auf den nächsten in eine Dehnungsfuge zwischen den Abschnitten 5 eintaucht. Dadurch ist der Lauf der Rolle 9 besonders leise und ruckfrei. Das wird noch dadurch verstärkt, dass die Zähne 6 in Längsrichtung L der Auflage 1 versetzt zueinander angeordnet sind. Der Übertritt der Rolle 9 von einem Abschnitt 5 zum nächsten erfolgt damit zeitlich verteilt, weil die Rolle 9 zu verschiedenen Zeiten auf die Dehnungsfuge zwischen den Zähnen 6 trifft. Auch bei einer Energieführungskette ohne Rollen würde sich auf entsprechende Weise ein besonders leiser und ruckfreier Lauf der Energieführungskette ergeben.

Zu erkennen ist an Fig. 2 weiterhin, dass die Abschnitte 5 an ihren Enden ein jeweiliges Anschlagselement 10 aufweisen, durch welches sich die benachbarten Abschnitte 5 in Längsrichtung L nur begrenzt voneinander entfernen können. Gezeigt ist in Fig. 2 die Situation, in der die beiden Abschnitte 5 maximal voneinander entfernt sind. In dieser Situation berühren sich die Anschlagselemente 10 der beiden Abschnitte 5. Daher können die beiden Abschnitte 5 in beziehungsweise entgegen der Längsrichtung L nicht weiter auseinandergezogen werden. So wird die Auflage 1 durch die Anschlagselemente 10 zusammengehalten.

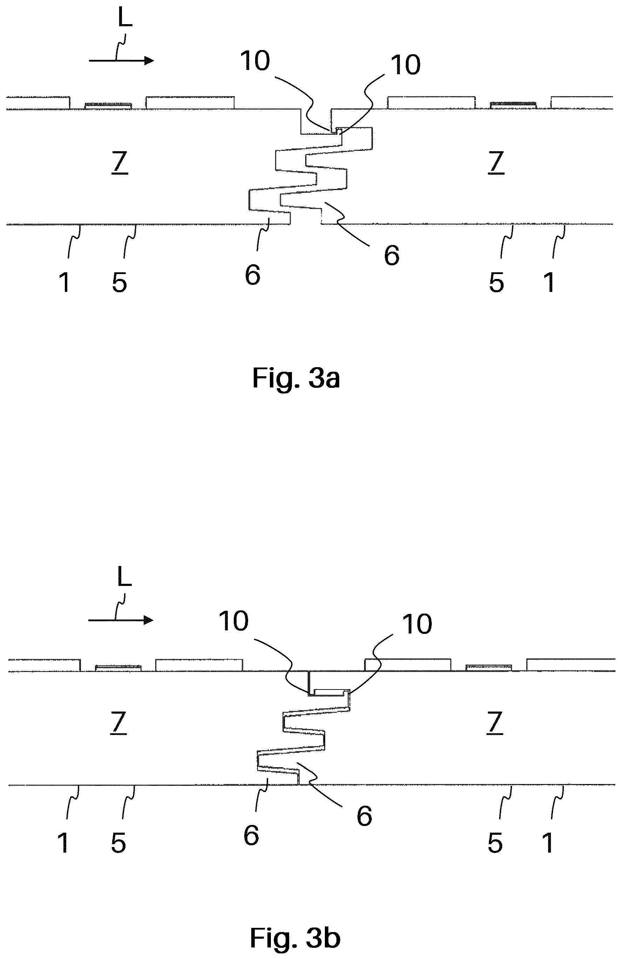

Fig. 3a und 3b zeigen zwei weitere Draufsichten auf einen Teil der Auflage 1 der Vorrichtung 11 aus Fig. 1. Gezeigt sind die beiden Abschnitte 5 mit der Roll- oder Gleitfläche 7, den Zähnen 6 und den Anschlagselementen 10. Fig. 3a zeigt wie Fig. 2 die Situation, in der die beiden Abschnitte 5 maximal auseinandergezogen sind. Fig. 3b zeigt demgegenüber die Situation, in der die beiden Abschnitte 5 einander unmittelbar berühren. Die Fig. 3a und 3b zeigen somit die beiden Extremsituationen, zwischen denen sich die Abschnitte 5 bewegen können.

Fig. 4 zeigt eine Querschnittsdarstellung einer erfindungsgemäßen Anordnung 14 umfassend zwei der Vorrichtungen 11 aus Fig. 1 sowie eine Energieführungskette 2. Die beiden Vorrichtungen 11 sind einander gegenüberliegend angeordnet. Die Vorrichtungen 11 sind jeweils aus einem Halter 12 und einer Auflage 1 gebildet. Zu erkennen ist, dass Seitenlaschen 15 des Obertrums 3 der Energieführungskette 2 mit einer jeweiligen Rolle 9 auf den Roll- oder Gleitflächen 7 der Vorrichtungen 11 aufliegen, und dass Seitenlaschen 15 des Untertrums 4 der Energieführungskette 2 mit einer jeweiligen Rolle 9 auf den Ablageflächen 8 der Vorrichtungen 11 aufliegen. Weitere Rollen 9 außerhalb der Zeichenebene können ebenfalls auf den Roll- oder Gleitflächen 7 aufliegen. Die Energieführungskette 2 könnte auch ohne Rollen ausgebildet sein. Weiterhin ist an Fig. 4 zu erkennen, dass die Energieführungskette 2 durch die Führungsflächen 13 der beiden Vorrichtungen 11 geführt wird. Dies gilt in der gezeigten Ausführungsform sowohl für das Obertrum 3 als auch für das Untertrum 4. Die Längsrichtung L steht in Fig. 4 senkrecht zur Zeichenebene.

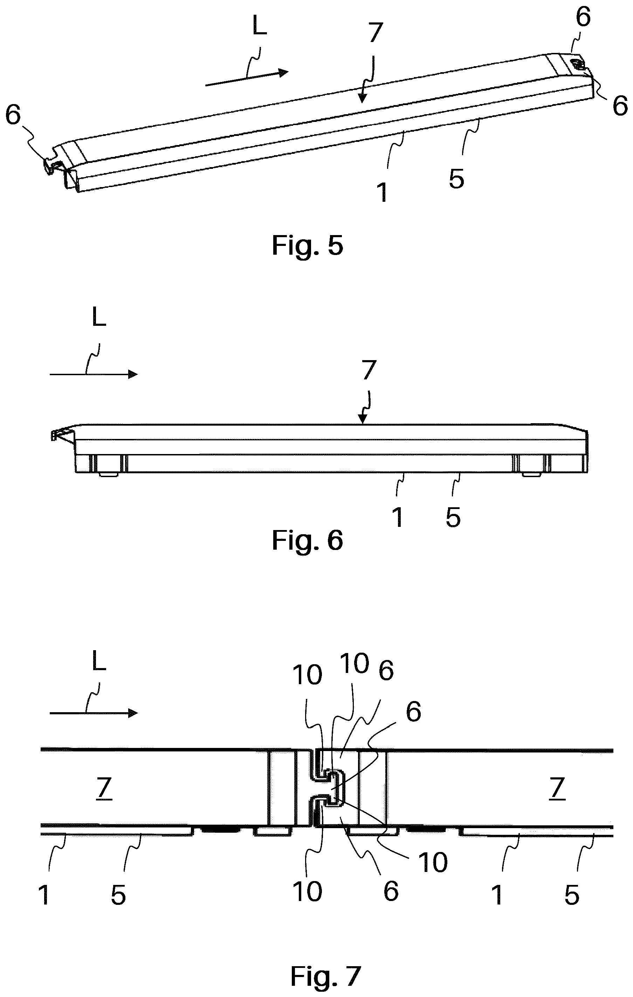

Fig. 5 zeigt eine weitere Ausführungsform eines Abschnitts 5 einer (nicht weiter gezeigten) Rollauflage 1. Zu erkennen ist, dass der Abschnitt 5 an einem seiner Enden einen einzelnen Zahn 6 und an dem anderen seiner Enden zwei Zähne 6 aufweist. Eingezeichnet sind zudem die Längsrichtung L und die Roll- und Gleitfläche 7.

Fig. 6 zeigt eine Seitenansicht des Abschnitts 5 aus Fig. 5. Zu erkennen ist, die Roll- oder Gleitfläche 7 an beiden Enden des Abschnitte 5 quer zur Längsrichtung L abgeflacht ist.

Fig. 7 zeigt einen Teil einer Rollauflage 1 mit zwei Abschnitten 5, die jeweils wie die in den Fig. 5 und 6 gezeigten ausgebildet sind. Zu erkennen ist, dass der einzelne Zahn 6 des linken der gezeigten Abschnitte T-förmig ausgebildet ist dass die beiden Zähne 6 des anderen Abschnitts 5 jeweils L-förmig ausgebildet sind. Die beiden L-förmigen Zähne 6 sind so angeordnet, dass durch diese eine Aussparung gebildet ist, in der der T-förmige Zahn 6 nur begrenzt beweglich ist. Insoweit bilden die Zähne 6 insgesamt vier Anschlagselemente 10.

### Bezugszeichenliste

- 1: Auflage
- 2: Energieführungskette
- 3: Obertrum
- 4: Untertrum
- 5: Abschnitt
- 6: Zahn
- 7: Roll- oder Gleitfläche
- 8: Ablagefläche
- 9: Rolle
- 10: Anschlagselement
- 11: Vorrichtung
- 12: Halter
- 13: Führungsfläche
- 14: Anordnung
- 15: Seitenlasche

- L: Längsrichtung

## Patentansprüche

1. Auflage (1) für eine Energieführungskette (2), wobei die Auflage (1) in einer Längsrichtung (L) in eine Mehrzahl von Abschnitten (5) unterteilt ist, wobei die Abschnitte (5) an ihren Enden jeweils mindestens einen Zahn (6) aufweisen, und wobei jeweils zwei benachbarte der Abschnitte (5) über die Zähne (6) miteinander verzahnt sind, **dadurch gekennzeichnet, dass** die Abschnitte (5) an ihren Enden ein jeweiliges Anschlagselement (10) aufweisen, durch welches sich benachbarte der Abschnitte (5) in Längsrichtung (L) der Auflage (1) nur begrenzt voneinander entfernen können.

2. Auflage (1) nach Anspruch 1, wobei die Auflage (1) eine Roll- oder Gleitfläche (7) für die Energieführungskette (2) bildet, und wobei die Roll- oder Gleitfläche (7) teilweise von den Zähnen (6) gebildet ist.

3. Auflage (1) nach einem der vorstehenden Ansprüche, wobei die Abschnitte (5) an ihren Enden jeweils eine Mehrzahl der Zähne (6) aufweisen, die in Längsrichtung (L) der Auflage (1) versetzt zueinander angeordnet sind.

4. Auflage (1) nach einem der vorstehenden Ansprüche, wobei die Abschnitte (5) an ihren Enden jeweils zwischen 1 und 10 Zähne (6) aufweisen.

5. Auflage (1) nach einem der vorstehenden Ansprüche, wobei die Auflage (1) eine Roll- oder Gleitfläche (7) für die Energieführungskette (2) bildet, und wobei die Roll- oder Gleitfläche (7) an mindestens einem Ende mindestens eines der Abschnitte (5) quer zur Längsrichtung (L) abgeflacht ist.

6. Vorrichtung (11) zum Halten und Führen einer Energieführungskette (2), umfassend einen Halter (12) und eine daran befestigte Auflage (1) gemäß Anspruch 1.

7. Vorrichtung (11) nach Anspruch 6, wobei die Auflage (1) nach einem der Ansprüche 2 bis 5 ausgebildet ist.

8. Vorrichtung (11) nach Anspruch 6 oder 7, wobei der Halter (12) eine Führungsfläche (13) aufweist, an der die Auflage (1) gehalten ist, und wobei eine Roll- oder Gleitfläche (7) der Auflage (1) senkrecht zu der Führungsfläche (13) ausgerichtet ist.

9. Anordnung (14) umfassend eine Energieführungskette (2) und eine Auflage (1) gemäß Anspruch 1, wobei ein Teil der Energieführungskette (2) auf einer von der Auflage (1) gebildeten Roll- oder Gleitfläche (7) aufliegt.

10. Anordnung (14) nach Anspruch 9, wobei die Auflage (1) nach einem der Ansprüche 2 bis 4 ausgebildet ist.

11. Anordnung (14) nach Anspruch 9 oder 10, weiterhin umfassend einen Halter (12) mit einer Führungsfläche (13), wobei die Auflage (1) an der Führungsfläche (13) gehalten ist, wobei die Roll- oder Gleitfläche (7) senkrecht zu der Führungsfläche (13) ausgerichtet ist, und wobei ein Teil der Energieführungskette (2) durch die Führungsfläche (13) geführt ist.

12. Anordnung (14) nach Anspruch 11, wobei an dem Halter (12) eine Ablagefläche (8) ausgebildet ist, die zu der Roll- oder Gleitfläche (7) der Auflage (1) parallel ausgerichtet ist, und wobei ein Teil der Energieführungskette (2) auf der Ablagefläche (8) aufliegt.

13. Anordnung (14) nach Anspruch 12, wobei die Energieführungskette (2) ein Obertrum (3) und ein Untertrum (4) aufweist, wobei zumindest ein Teil des Obertrums (3) auf der Roll- oder Gleitfläche (7) aufliegt, und wobei zumindest ein Teil des Untertrums (4) auf der Ablagefläche (8) aufliegt.

14. Anordnung (14) nach einem der Ansprüche 9 bis 13, wobei die Energieführungskette eine Mehrzahl von Rollen (9) aufweist, und wobei ein Teil der Energieführungskette (2) mit den Rollen (9) auf der von der Auflage (1) gebildeten Roll- oder Gleitfläche (7) aufliegt.

## Revendications

1. Support (1) pour une chaîne d'alimentation en énergie (2), le support (1) étant divisé dans une direction longitudinale (L) en une multitude de sections (5), les sections (5) comportant sur leurs extrémités respectivement au moins une dent (6), et deux sections adjacentes des sections (5) étant respectivement imbriquées l'une avec l'autre par les dents (6), **caractérisé en ce que** les sections (5) comportent sur leurs extrémités un élément de butée (10) respectif, par lequel des sections adjacentes des sections (5) peuvent s'éloigner les unes des autres seulement de manière limitée dans la direction longitudinale (L) du support (1).

2. Support (1) selon la revendication 1, le support (1) formant une surface de roulement ou de glissement (7) pour la chaîne d'alimentation en énergie (2), la surface de roulement ou de glissement (7) étant formée en partie par les dents (6).

3. Support (1) selon l'une des revendications précédentes, les sections (5) comportant sur leurs extrémités respectivement une multitude des dents (6), qui sont disposées de manière décalée les unes par rapport aux autres dans la direction longitudinale (L) du support (1).

4. Support (1) selon l'une des revendications précédentes, les sections (5) comportant sur leurs extrémités respectivement entre 1 et 10 dents (6).

5. Support (1) selon l'une des revendications précédentes, le support (1) formant une surface de roulement ou de glissement (7) pour la chaîne d'alimentation en énergie (2) et la surface de roulement ou de glissement (7) étant aplatie sur au moins une extrémité d'au moins une des sections (5) transversalement à la direction longitudinale (L).

6. Dispositif (11) de maintien et de guidage d'une chaîne d'alimentation en énergie (2), comprenant un système de maintien (12) et un support (1) selon la revendication 1 fixé sur celui-ci.

7. Dispositif (11) selon la revendication 6, le support (1) étant réalisé selon l'une des revendications 2 à 5.

8. Dispositif (11) selon la revendication 6 ou 7, le système de maintien (12) comportant une surface de guidage (13), sur laquelle le support (1) est maintenu, et une surface de roulement ou de glissement (7) du support (1) étant orientée perpendiculairement à la surface de guidage (13).

9. Ensemble (14) comprenant une chaîne d'alimentation en énergie (2) et un support (1) selon la revendication 1,
une partie de la chaîne d'alimentation en énergie (2) reposant sur une surface de roulement ou de glissement (7) formée par le support (1).

10. Ensemble (14) selon la revendication 9, le support (1) étant réalisé selon l'une des revendications 2 à 4.

11. Ensemble (14) selon la revendication 9 ou 10, comprenant par ailleurs un système de maintien (12) avec une surface de guidage (13), le support (1) étant maintenu sur la surface de guidage (13), la surface de roulement ou de glissement (7) étant orientée perpendiculairement à la surface de guidage (13), et une partie de la chaîne d'alimentation en énergie (2) étant guidée par la surface de guidage (13).

12. Ensemble (14) selon la revendication 11, une surface de dépôt (8) étant réalisée sur le système de maintien (12), laquelle est orientée parallèlement à la surface de roulement ou de glissement (7) du support (1), et une partie de la chaîne d'alimentation en énergie (2) reposant sur la surface de dépôt (8).

13. Ensemble (14) selon la revendication 12, la chaîne d'alimentation en énergie (2) comportant un brin supérieur (3) et un brin inférieur (4), au moins une partie du brin supérieur (3) reposant sur la surface de roulement ou de glissement (7) et au moins une partie du brin inférieur (4) reposant sur la surface de dépôt (8).

14. Ensemble (14) selon l'une des revendications 9 à 13, la chaîne d'alimentation en énergie comportant une multitude de rouleaux (9) et une partie de la chaîne d'alimentation en énergie (2) reposant avec les rouleaux (9) sur la surface de roulement ou de glissement (7) formée par le support (1).

## Claims

1. Support (1) for a cable carrier (2), wherein the support (1) is divided in a longitudinal direction (L) into a plurality of sections (5), wherein the sections (5) each have at least one tooth (6) at their ends, and wherein in each case two adjacent sections (5) are interlocked with each other via the teeth (6), **characterized in that** the sections (5) have at their ends a respective stop element (10) by means of which adjacent sections (5) can be moved apart from each other in the longitudinal direction (L) of the support (1) only to a limited extent.

2. Support (1) according to Claim 1, wherein the support (1) forms a rolling or glide surface (7) for the cable carrier (2), and wherein the rolling or glide surface (7) is formed partly by the teeth (6).

3. Support (1) according to either of the preceding claims, wherein at their ends the sections (5) in each case have a plurality of teeth (6) which are arranged offset relative to one another in the longitudinal direction (L) of the support (1).

4. Support (1) according to one of the preceding claims, wherein the sections (5) each have between 1 and 10 teeth (6) at their ends.

5. Support (1) according to one of the preceding claims, wherein the support (1) forms a rolling or glide surface (7) for the cable carrier (2), and wherein the rolling or glide surface (7) is flattened transversely to the longitudinal direction (L) at at least one end of at least one of the sections (5).

6. Device (11) for holding and guiding a cable carrier (2), comprising a bracket (12) and a support (1) according to Claim 1 fastened thereto.

7. Device (11) according to Claim 6, wherein the support (1) is designed according to one of Claims 2 to 5.

8. Device (11) according to Claim 6 or 7, wherein the bracket (12) has a guide surface (13) on which the support (1) is held, and wherein a rolling or glide surface (7) of the support (1) is oriented perpendicular to the guide surface (13).

9. Arrangement (14) comprising a cable carrier (2) and a support (1) according to Claim 1,
wherein a part of the cable carrier (2) lies on a rolling or glide surface (7) formed by the support (1).

10. Arrangement (14) according to Claim 9, wherein the support (1) is designed according to one of Claims 2 to 4.

11. Arrangement (14) according to Claim 9 or 10, further comprising a bracket (12) with a guide surface (13), wherein the support (1) is held on the guide surface (13), wherein the rolling or glide surface (7) is oriented perpendicular to the guide surface (13), and wherein a part of the cable carrier (2) is guided by the guide surface (13).

12. Arrangement (14) according to Claim 11, wherein a tray surface (8) which is oriented parallel to the rolling or glide surface (7) of the support (1) is formed at the bracket (12), and wherein a part of the cable carrier (2) lies on the tray surface (8).

13. Arrangement (14) according to Claim 12, wherein the cable carrier (2) has an upper run (3) and a lower run (4), wherein at least a part of the upper run (3) lies on the rolling or glide surface (7), and wherein at least a part of the lower run (4) lies on the tray surface (8).

14. Arrangement (14) according to one of Claims 9 to 13, wherein the cable carrier has a plurality of rollers (9), and wherein a part of the cable carrier (2) lies with the rollers (9) on the rolling or glide surface (7) formed by the support (1).
